(19) **Europäisches Patentamt**

**European Patent Office**

**Office européen des brevets**

(11) **EP 1 320 570 B1**

(12) **EUROPÄISCHE PATENTSCHRIFT**

(45) Veröffentlichungstag und Bekanntmachung des Hinweises auf die Patenterteilung:
**16.03.2005 Patentblatt 2005/11**

(51) Int Cl.⁷: **C08L 23/04**, C08L 23/08

(21) Anmeldenummer: **01976204.6**

(86) Internationale Anmeldenummer:
**PCT/EP2001/010381**

(22) Anmeldetag: **08.09.2001**

(87) Internationale Veröffentlichungsnummer:
**WO 2002/026880 (04.04.2002 Gazette 2002/12)**

(54) **POLYETHYLEN FORMMASSE GEEIGNET ALS ROHRWERKSTOFF MIT HERAUSRAGENDEN VERARBEITUNGSEIGENSCHAFTEN**

POLYETHYLENE MOULDING COMPOUND SUITABLE AS A PIPE MATERIAL WITH EXCELLENT PROCESSING PROPERTIES

MATIERE A MOULER POLYETHYLENE UTILISEE COMME MATERIAU POUR TUYAUX PRESENTANT DES CARACTERISTIQUES DE TRAITEMENT AMELIOREES

(84) Benannte Vertragsstaaten:
**DE ES FR GB IT TR**

(30) Priorität: **27.09.2000 DE 10047861**

(43) Veröffentlichungstag der Anmeldung:
**25.06.2003 Patentblatt 2003/26**

(73) Patentinhaber: **Basell Polyolefine GmbH 50389 Wesseling (DE)**

(72) Erfinder:
• **KRÜMPEL, Peter**
  **D-65520 Bad Camberg (DE)**
• **ENDERLE, Johannes-Friedrich**
  **D-60318 Frankfurt (DE)**

(56) Entgegenhaltungen:
**EP-A- 0 707 040          EP-A- 0 757 076**
**WO-A-95/11264          US-A- 5 338 589**
**US-A- 5 539 076          US-A- 5 582 923**

**Beschreibung**

Die vorliegende Erfindung betrifft eine polymere Formmasse aus einem ersten Ethylenpolymer (A) und einem zweiten Ethylenpolymer (B), die sich wegen ihrer Verarbeitungseigenschaften besonders zur Herstellung dickwandiger, großkalibriger Rohre eignet.

Polyethylen wird in großem Umfang zur Herstellung von Rohren, beispielsweise für Gas- und Wassertransportsysteme, verwendet, weil für solche Rohre ein Werkstoff mit hoher mechanischer Festigkeit, hoher Korrosionsfestigkeit und guter Langzeitbeständigkeit benötigt wird. Zahlreiche Publikationen beschreiben Werkstoffe mit den verschiedensten Eigenschaften und Verfahren zu deren Herstellung.

Die EP-A-603,935 beschreibt bereits eine Formmasse auf Basis von Polyethylen, die eine bimodale Molmassenverteilung besitzt und die sich unter anderem auch zur Herstellung von Rohren eignen soll. Rohre, die aus den Formmassen nach dieser Literaturstelle hergestellt sind, lassen jedoch noch in Bezug auf ihre Innendruckdauerbelastbarkeit, ihre Spannungsrißbeständigkeit, ihre Tieftemperaturkerbschlagzähigkeit und ihren Widerstand gegen schnelles Rißwachstum sehr zu wünschen übrig.

Um Rohre mit ausgewogenen mechanischen Eigenschaften und damit einer optimalen Eigenschaftskombination zu erreichen, ist es notwendig, einen Rohstoff einzusetzen, der eine noch breitere Molmassenverteilung aufweist. Ein solcher Rohstoff ist in der US-PS 5,338,589 beschrieben und wird mit einem hochaktiven Ziegler Katalysator hergestellt, der aus der WO 91/18934 bekannt ist und bei dem das dort verwendete Magnesiumalkoholat als gelförmige Suspension eingesetzt wird.

Nachteilig bei der Verarbeitung der bekannten Formmassen ist ihre zu niedrige Schmelzefestigkeit. Diese macht sich insbesondere bei der Verarbeitung zu Rohren bemerkbar. Dort besteht nämlich die Gefahr des Aufreißens des Rohres im Schmelzezustand noch während der Rohrverfestigung, die beispielsweise in einer Vakuumkalibrier-Einheit durchgeführt wird. Ferner führt die geringe Schmelzefestigkeit immer wieder zu einer permanenten Instabilität des Extrusionsprozesses. Weiterhin tritt bei der Verarbeitung der bekannten Formmassen ein Sagging-Problem bei der Extrusion dickwandiger Rohre auf. Dieses besteht darin, dass vorgegebene Dickentoleranzen bei der industriellen Fertigung nicht eingehalten werden können, weil das Eigengewicht der Schmelze wegen der bis zu mehreren Stunden dauernden totalen Verfestigung der Rohre aus thermoplastischem Kunststoff zu Ungleichmäßigkeiten der Wanddicke, gemessen über den gesamten Umfang der Rohre, führt.

Aufgabe der Erfindung war daher die Bereitstellung einer Polyethylen Formmasse, die eine genügend hohe Schmelzefestigkeit besitzt, um damit großkalibrige, dickwandige Rohre herstellen zu können, ohne dass die Gefahr des Aufreißens der Rohre während der Herstellung oder des Sagging-Problems auftritt, die aber gleichzeitig auch ausreichende mechanische Eigenschaften und Produkthomogenität besitzt um die Qualitätskriterien der Rohre wie Innendruckdauerbelastbarkeit, hohe Spannungsrißbeständigkeit, Tieftemperaturkerbschlagzähigkeit und hohen Widerstand gegen schnelles Rißwachstum beizubehalten.

Gelöst wird diese Aufgabe durch eine Formmasse der eingangs genannten Art, deren Kennzeichenmerkmale darin zu sehen sind, dass die Formmasse eine Menge im Bereich von 55 bis 75 Gew.-% an erstem Ethylenpolymer (A) und eine Menge im Bereich von 25 bis 45 Gew.-% an zweitem Ethylenpolymer (B) enthält, jeweils bezogen auf das Gesamtgewicht der Formmasse, wobei das erste Ethylenpolymer (A) ein Copolymer von Ethylen mit einem 1-Olefin mit einer Gesamtzahl von C-Atomen im Bereich von 4 bis 10 als Comonomer und mit einem Comonomeranteil im Bereich von 0,2 bis 5 Gew.-%, bezogen auf das Gewicht des ersten Ethylenpolymers (A), und einer in zwei getrennten Polymerisationsstufen gebildeten bimodalen Molmassenverteilung darstellt und wobei das zweite Ethylenpolymer (B) ein Copolymer aus Ethylen und einem 1-Olefin mit einer Anzahl von C-Atomen im Bereich von 4 bis 10 als Comonomer darstellt, das eine bimodale Molmassenverteilung besitzt, die anders ist als die des ersten Ethylenpolymers (A).

Die erfindungsgemäße Formmasse wird durch Mischen der getrennt voneinander hergestellten Mischungskomponenten, erstes Ethylenpolymer (A) und zweites Ethylenpolymer (B), in einem Extruder als Extruderblend hergestellt.

Die erfindungsgemäße Formmasse, aus dem ein Rohr mit den aufgabengemäß hochwertigen Qualitätskriterien gefertigt werden kann, enthält vorzugsweise ein erstes Ethylenpolymer (A) mit einer Dichte (gemessen bei einer Temperatur von 23 °C) im Bereich von 0,94 bis 0,96 g/cm$^3$ und einer in zwei getrennten Polymerisationsstufen gebildeten bimodalen Molmassenverteilung, bei dem das Verhältnis des Gewichts des niedermolekularen Anteils zum Gewicht des höhermolekularen Anteils im Bereich von 0,5 bis 2,0 liegt, vorzugsweise von 0,8 bis 1,8. Das erste Ethylenpolymer (A) enthält erfindungsgemäß geringe Anteile an weiteren Comonomereinheiten wie 1-Buten, 1-Penten, 1-Hexen oder 4-Methylpenten-1.

Die Bimodalität des ersten Ethylenpolymers (A) kann als Maß für die Lageder Schwerpunkte von zwei Einzelmolmassenverteilungen mit Hilfe der Viskositätszahlen VZ nach ISO/R 1191 der in zwei getrennten Polymerisationsstufen gebildeten Polymeren beschrieben werden. Dabei beträgt die $VZ_1$ des in der ersten Polymerisationsstufe gebildeten niedermolekularen Polyethylens 40 bis 80 cm$^3$/g, während $VZ_{gesamt}$ des Endprodukts im Bereich von 350 bis 450 cm$^3$/g liegt. $VZ_2$ des in der zweiten Polymerisationsstufe gebildeten höhermolekularen Polyethylens lässt sich nach der folgenden mathematischen Formel berechnen:

$$VZ_2 = \frac{VZ_{gesamt} - w_1 \cdot VZ_1}{1 - w_1}$$

wobei $w_1$ für den Gewichtsanteil des in der ersten Stufe gebildeten niedermolekularen Polyethylens steht, gemessen in Gew.-%, bezogen auf das Gesamtgewicht des in beiden Stufen gebildeten Polyethylens mit bimodaler Molmassenverteilung. Der für $VZ_2$ errechnete Wert liegt normalerweise im Bereich von 500 bis 880 cm$^3$/g.

Das erste Ethylenpolymer (A) wird durch Polymerisation der Monomeren in Suspension, in Lösung oder in der Gasphase bei Temperaturen im Bereich von 20 bis 120 °C, einem Druck im Bereich von 2 bis 60 bar und in Gegenwart eines Ziegler-Katalysators erhalten, der aus einer Übergangsmetallverbindung und einer aluminiumorganischen Verbindung zusammengesetzt ist. Die Polymerisation wird zweistufig geführt, wobei die Molmasse des in jeder Stufe erzeugten Anteils an Polymer jeweils mit Hilfe von Wasserstoff geregelt wird.

Erfindungsgemäß wird daher ein erstes Ethylenpolymer (A) hergestellt, das eine Menge im Bereich von 35 bis 65 Gew.-% an niedermolekularem Homopolymer als Komponente (A$^1$) und eine Menge im Bereich von 65 bis 35 Gew.-% an hochmolekularem Copolymer als Komponente (A$^2$) enthält, bezogen auf das Gesamtgewicht an erstem Ethylenpolymer (A).

Das niedermolekulare Homopolymer der Komponente (A$^1$) besitzt dabei eine Viskositätszahl VZ$^{A1}$ im Bereich von 40 bis 90 cm$^3$/g und einen MFR$^{A1}_{190/2,16}$ im Bereich von 40 bis 2000 dg/min. Die Dichte d$^{A1}$ des niedermolekularen Homopolymers der Komponente (A$^1$) liegt erfindungsgemäß im Bereich bis zu maximal 0,965 g/cm$^3$.

Das hochmolekulare Copolymer der Komponente (A$^2$) besitzt hingegen eine Viskositätszahl VZ$^{A2}$ im Bereich von 500 bis 1000 cm$^3$/g und eine Dichte d$^{A2}$ im Bereich von 0,922 bis 0,944 g/cm$^3$.

Ein sehr nützliches Werkzeug zur Bestimmung der Comonomerverteilung in teilkristallinem Polyethylen ist die präparative TREF-Methode (Temperature-Rising Elution Fractionation). Sie wird beschrieben in Polym. Prep. A, Chem. Soc. - Polym. Chem. Div., 18, 182 (1977) von L. Wild und T. Ryle unter dem Titel: "Crystallization distribution in Polymers: A new analytical technique". Diese Fraktioniermethode basiert auf der unterschiedlichen Fähigkeit der einzelnen Komponenten eines Polymers, im Polyethylen zu kristallisieren, und erlaubt es damit, das teilkristalline Polymer in verschiedene Anteile zu separieren, die allein abhängig sind von der Dicke der Kristallit-Lamellen.

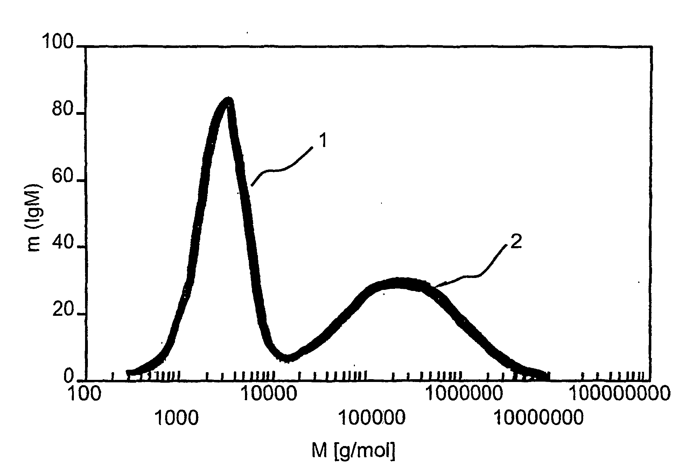

Fig. 1 zeigt das Ergebnis einer gelpermeationschromatographischen Untersuchung einer TREF-Fraktion bei 78 °C eines typischerweise als erstes Ethylenpolymer (A) für die erfindungsgemäße Formmasse eingesetzten Copolymers.

Unter dem mit Bezugsziffer 1 kenntlich gemachten Peak verbirgt sich die bei 78 °C lösliche, niedermolekulare aber hochkristalline PE-Fraktion, während der Peak mit der Bezugsziffer 2 den hochmolekularen und stark comonomerhaltigen Anteil repräsentiert, der für die hohe Zahl an sogenannten "Tie-Molekülen" zwischen den Kristallit-Lamellen und die Qualität der erfindungsgemäßen Formmasse, ausgedrückt durch ihre außerordentlich hohe Spannungsrissbeständigkeit, verantwortlich ist. Das hochmolekulare Copolymer der Komponente (A$^2$) besitzt somit in der Fraktion bei einer Temperatur von 78 °C nach der präparativen TREF-Methode eine mittlere Molmasse, ausgedrückt durch das Gewichtsmittel M$_w$, von ≥ 180.000 g/mol.

Das in der erfindungsgemäßen Formmasse enthaltene zweite Ethlenpolymer (B) stellt ein Copolymer aus Ethylen dar, das ebenfalls eine bimodale Molmassenverteilung besitzt, einen MFR$^B_{190/5}$ im Bereich von 0,09 bis 0,19 dg/min, eine Dichte d$^B$ im Bereich von 0,94 bis 0,95 g/cm$^3$ und eine Viskositätszahl VZ$^B$ im Bereich von 460 bis 520 cm$^3$/g.

Erfindungsgemäß wird daher ein zweites Ethylenpolymer (B) als Reaktorblend in Gegenwart eines Ziegler Katalysators hergestellt, das eine Menge im Bereich von 15 bis 40 Gew.-% an ultrahochmolekularem Ethylenhomopolymer als Komponente (B$^1$) und eine Menge im Bereich von 60 bis 85 Gew.-% an niedermolekularem Copolymer mit 1-Buten, 1-Hexen oder 1-Octen als Comonomer in einer Menge von 1 bis 15 Gew.-% als Komponente (B$^2$) enthält, bezogen auf das Gesamtgewicht an zweitem Ethylenpolymer (B). Dabei besitzt das ultrahochmolekulare Ethylenhomopolymer der Komponente (B$^1$) eine Viskositätszahl, ausgedrückt als VZ$^{B1}$, im Bereich von 1000 bis 2000 cm$^3$/g und das niedermolekulare Copolymer der Komponente (B$^2$) eine Viskositätszahl, ausgedrückt als VZ$^{B2}$, im Bereich von 80 bis 150 cm$^3$/g.

Die erfindungsgemäße Formmasse für das herzustellende Rohr kann neben dem ersten Ethylenpolymer (A) und dem zweiten Ethylenpolymer (B) noch weitere Zusatzstoffe enthalten. Solche Zusatzstoffe sind beispielsweise Wärmestabilisatoren, Antioxidantien, UV-Absorber, Lichtschutzmittel, Metalldesaktivatoren, peroxidzerstörende Verbindungen, basische Costabilisatoren in Mengen von 0 bis 10 Gew.-%, vorzugsweise 0 bis 5 Gew.-%, aber auch Füllstoffe, Verstärkungsmittel, Weichmacher, Gleitmittel, Emulgatoren, Pigmente, optische Aufheller, Flammschutzmittel, Antistatika, Treibmittel oder Kombinationen von diesen in Gesamtmengen von 0 bis 50 Gew.-%, bezogen auf das Gesamtgewicht der Formmasse.

Das Rohr aus der erfindungsgemäßen Formmasse wird hergestellt, indem die Formmasse zunächst in einem Extruder bei Temperaturen im Bereich von 200 bis 250 °C plastifiziert und dann durch eine ringförmige Düse ausgepreßt und abgekühlt wird. Rohre aus der erfindungsgemäßen Formmasse eignen sich generell für alle Druckklassen gemäß DIN 8074.

Für die Verarbeitung zu Rohren können sowohl konventionelle Einschneckenextruder mit glatter Einzugszone als auch Hochleistungsextruder mit feingenutetem Zylinder und förderwirksamem Einzug eingesetzt werden. Die Schnecken werden typischerweise als Dekompressionsschnecken ausgelegt mit einer Länge von 25 bis 30 D (D = $\varnothing$). Die Dekompressionsschnecken besitzen eine Austragszone, in der Temperaturunterschiede in der Schmelze ausgeglichen werden und in der die durch Scherung entstandenen Relaxationsspannungen abgebaut werden sollen.

Die vom Extruder kommende Schmelze wird über konisch angeordnete Bohrungen zunächst auf einen Ringquerschnitt verteilt und dann über einen Wendelverteiler oder einen Siebkorb der Dom/Mundstückskombination zugeführt. Zusätzlich können bei Bedarf noch Stauringe oder andere Konstruktionselemente zur Vergleichmäßigung des Schmelzestromes vor dem Düsenaustritt eingebaut sein.

Die Kalibrierung und Kühlung erfolgt bis hin zu großen Rohrdurchmessern zweckmäßigerweise durch Vakuumkalibrierung. Die eigentliche Formgebung erfolgt mit geschlitzten Kalibrierhülsen, die zur besseren Wärmeabführung aus Buntmetall gefertigt sind. Dabei sorgt ein im Einlauf zugeführter Wasserfilm für ein rasches Abkühlen der Oberfläche des Rohres unter den Kristallitschmelzpunkt und dient zusätzlich als Schmierfilm zum Verringern der Reibungskräfte. Die Gesamtlänge L der Kühlstrecke wird unter der Annahme bemessen, daß eine Schmelze mit einer Temperatur von 220 °C mit Hilfe von Wasser mit einer Temperatur von 15 bis 20 °C soweit abgekühlt werden soll, daß die Temperatur der Rohrinnenoberfläche maximal 85 °C beträgt.

Die Spannungsrißbeständigkeit ist ein Merkmal, das bereits aus der EP-A 436 520 bekannt ist. Der Prozess des langsamen Risswachstums kann durch molekulare Strukturparameter wie Molmassen- und Comonomerverteilung wesentlich beeinflusst werden. Die Anzahl der sogenannten Tie- oder Verbundmoleküle ist zunächst durch die Kettenlänge des Polymers bestimmt. Die Morphologie von teilkristallinen Polymeren wird zusätzlich durch Comonomereinbau eingestellt, weil die Dicke von Kristallitlamellen durch das Einbringen von Kurzkettenverzweigungen beeinflußt werden kann. Das bedeutet, daß die Anzahl von sogenannten Tie- oder Verbundmolekülen in Copolymeren höher ist als in Homopolymeren mit vergleichbarer Kettenlänge.

- Die Spannungsrissbeständigkeit FNCT der erfindungsgemäßen Formmasse wird nach einer internen Messmethode ermittelt. Diese Labormethode ist von M. Fleißner in Kunststoffe 77 (1987), S. 45 ff, beschrieben. Diese Publikation zeigt, dass zwischen der Bestimmung des langsamen Risswachstums im Zeitstandversuch an rundum gekerbten Probestäben und dem spröden Ast der Zeitstandsinnendruckprüfung nach ISO 1167 ein Zusammenhang besteht. Eine Verkürzung der Zeit bis zum Versagen wird durch die Verkürzung der Rissinitiierungszeit durch die Kerbe (1,6 mm/Rasierklinge) in 2%-iger wässriger Detergenzlösung Arkopal N 100 als spannungsrissförderndem Medium bei einer Temperatur von 95 °C und einer Zugspannung von 4,0 MPa erreicht. Die Probenherstellung erfolgt, indem drei Probekörper mit den Abmessungen 10 x 10 x 90 mm aus einer 10 mm dicken Pressplatte heraus gesägt werden. Die Probekörper werden rundum mit einer Rasierklinge in einer eigens dafür angefertigten Kerbvorrichtung (dargestellt in Abbildung 5 in der Publikation von Fleißner) in der Mitte gekerbt. Die Kerbtiefe beträgt 1,6 mm.

- Die Bruchzähigkeit aFM der erfindungsgemäßen Formmasse wird ebenfalls nach einer internen Messmethode an Probestäben mit den Abmessungen 10 x 10 x 80 mm, die aus einer 10 mm dicken Pressplatte herausgesägt wurden, bestimmt. In der bereits erwähnten Kerbvorrichtung werden sechs dieser Probestäbe mit der Rasierklinge in der Mitte gekerbt. Die Kerbtiefe beträgt 1,6 mm. Die Durchführung der Messung entspricht weitgehend der Charpy-Messprozedur nach ISO 179 bei veränderten Probekörpem und veränderter Schlaggeometrie (Widerlagerabstand). Alle Probekörper werden über eine Zeitdauer von 2 bis 3 h auf die Messtemperatur von 0 °C temperiert. Man legt dann einen Probekörper zügig auf das Widerlager eines Pendelschlagwerks gemäß ISO 179. Der Widerlagerabstand beträgt 60 mm. Der Fall des 2 J Hammers wird ausgelöst, wobei der Fallwinkel auf 160 °, die Pendellänge auf 225 mm und die Auftreffgeschwindigkeit auf 2,93 m/sec eingestellt wird. Zur Auswertung der Messung wird der Quotient aus verbrauchter Schlagenergie und Anfangsquerschnittfläche an der Kerbe $a_{FM}$ in mJ/mm$^2$ berechnet. Dabei können nur Werte bei vollständigem Bruch und Scharnierbruch als Grundlage für einen gemeinsamen Mittelwert dienen (siehe ISO 179).

- Die Scherviskosität ist ein ganz besonders wichtiges Merkmal der Polymerschmelze und steht für die erfindungsgemäß sehr ausschlaggebenden Fließeigenschaften des in schmelzflüssigem Zustand zu einem Rohr extrudierten Polymers. Sie wird gemäß ISO 6721-10, Teil 10, gemessen in einer oszillatorischen Scherströmung in einem Cone-Plate Rheometer (RDS-Messung) zunächst bei einer Kreisfrequenz von 0,001 rad/s und bei einer Schmelzetemperatur von 190 °C und dann bei einer Kreisfrequenz von 100 rad/s bei derselben Temperatur. Dann werden beide Messwerte in Relation gesetzt, woraus sich das Viskositätsverhältnis η(0,001)/η(100) ergibt, das erfindungsgemäß größer/gleich 100 sein soll.

Die nachfolgenden Ausführungsbeispiele sollen die Erfindung und deren Vorteile im Vergleich zu dem Stand der Technik für den Fachmann noch deutlicher darstellen.

**Beispiele 1 bis 9**

Ein erstes bimodales Ethylenpolymer (A) wurde nach der Vorschrift der WO 91/18934 mit einem Ziegler Katalysator aus Beispiel 2, der die Katalysator Komponente a mit der Operations-Nummer 2.2 hatte unter Einhaltung der nachfolgend in Tabelle 1 angegebenen Betriebsbedingungen hergestellt.

Tabelle 1

|  | Reaktor I Inhalt: 120 l | Reaktor II Inhalt: 120 l |
|---|---|---|
| Temperatur | 83 °C | 83 °C |
| Katalysatorzufuhr | 0,8 mmol/h | ----- |
| Cokatalysatorzufuhr | 15 mmol/h | 30 mmol/h |
| Dispergiermittel (Dieselöl; 130-170 °C) | 25 l/h | 50 l/h |
| Ethylen | 9 kg/h | 10 kg/h |
| Wasserstoff im Gasraum | 74 Vol.-% | 1 Vol.-% |
| 1-Buten | 0 | 250 ml/h |
| Gesamtdruck | 8,5 bar | 2,7 bar |

Das so hergestellte Ethylenpolymer (A) hatte einen Schmelzflussindex $MFI^A_{5/190°C}$ von 0,49 dg/min und eine Dichte $d^A$ von 0,948 g/cm$^3$ und es besaß einen Comonomeranteil von 1,5 Gew.-%, bezogen auf das Gesamtgewicht der höhermolekularen Komponente.

Dann wurde ein zweites bimodales Ethylenpolymer (B) nach der Vorschrift der EP-B-0 003 129 hergestellt. Dazu wurde in Gegenwart des in Beispiel 1 der EP-B beschriebenen Ziegler Katalysators in einem Rührkessel in Dieselöl mit einem Siedepunkt im Bereich von 130 bis 170 °C bei einer konstanten Temperatur von 85 °C über einen Zeitraum von 6 h 6,7 kg Ethylen/h und 0,24 kg 1-Buten/h eingeleitet. Nach einer Reaktionszeit von 3 h und 20 min wurde zusätzlich Wasserstoff aufgedrückt und weiter zugegeben, so dass innerhalb des Gasraumes des Rührkessels über die verbleibende Reaktionszeit von 2 h und 40 min eine konstante Wasserstoffkonzentration im Bereich von 60 bis 65 Vol.-% aufrecht erhalten wurde.

Das so hergestellte Ethylenpolymer (B) hatte einen Schmelzflussindex $MFI^B_{5/190°C}$ von 0,16 dg/min und eine Dichte $d^B$ von 0,940 g/cm$^3$.

Danach wurde das erste bimodale Ethylenpolymer (A) mit dem zweiten bimodalen Ethylenpolymer (B) in einem Extruder gemischt.

Die Mischungsverhältnisse sind in der nachfolgend angegebenen Tabelle für die Beispiele 1 bis 9 angegeben und auch die zugehörigen physikalischen Eigenschaften der aus der Mischung resultierenden Formmasse:

Tabelle 2

| Beispiel Nr: | 1 | 2 | 3 | 4 | 5 | 6 | 7 | 8 | 9 |
|---|---|---|---|---|---|---|---|---|---|
| Gew.-% Polymer (B) | 0 | 15 | 20 | 25 | 30 | 35 | 40 | 45 | 100 |
| Gew.-% Polymer (A) | 100 | 85 | 80 | 75 | 70 | 65 | 60 | 55 | 0 |
| MFI 190/5 [dg/min] | 0.49 | 0.31 | 0.3 | 0.295 | 0.285 | 0.27 | 0.26 | 0.24 | 0.16 |
| MFI 190/21.6 [dg/min] | 7.845 | 6.635 | 7.72 | 6.28 | 6.21 | 5.895 | 6.04 | 6.03 | 4.88 |
| FRR* | 16.0 | 21.4 | 25.7 | 21.3 | 21.8 | 21.8 | 23.2 | 25.1 | 37.5 |
| VZ[cm³/g] | 344 | 359 | 357 | 356 | 377 | 395 | 390 | 393 | 486 |

\* Mit FRR = Verhältnis von $MFI_{190/21,6}$ zu $MFI_{190/5}$

An den Mischungen der Beispiele 1 bis 9 wurden die Scherviskositäten $\eta$ nach der oben beschriebenen Messmethode (ISO 6721, Teil 10) bei einer Kreisfrequenz von 0,001 rad/s und bei einer Kreisfrequenz von 100 rad/s bestimmt und anschließend das Verhältnis $\eta_{0,001r/s}/\eta_{100r/s}$ berechnet. Die Ergebnisse sind in der nachfolgenden Tabelle 3 zusammengefasst:

Tabelle 3

| Beispiel | $\eta_{(0,001}$ rad/s) [Pa.s] | $\eta$(100 rad/s) [Pa·s] | $\eta$(0,001rad/s)/ $\eta$(100 rad/s) |
|---|---|---|---|
| 1 | $2,25·10^5$ | 2450 | 91,8 |
| 2 | $2,28·10^5$ | 2500 | 91,2 |
| 3 | $2,32·10^5$ | 2556 | 90,7 |
| 4 | $2,78·10^5$ | 2530 | 109,8 |
| 5 | $2,76·10^5$ | 2570 | 107,4 |
| 6 | $3,55.10^5$ | 2540 | 139,8 |
| 7 | $4,02.10^5$ | 2550 | 157,6 |
| 8 | $4,86·10^5$ | 2550 | 190,6 |
| 9 | $11,6·10^5$ | 2720 | 426,5 |

Man erkennt aus der Tabelle 3 auf einen Blick, dass die Mischungen der Beispiele 1 bis 3 Vergleichsbeispiele sind, bei denen das Verhältnis der bei den unterschiedlichen Kreisfrequenzen gemessenen Scherviskositäten $\eta_{0,001r/s}/\eta_{100r/s}$ den Wert von 100 unterschreitet. Die Beispiele 4 bis 8 dagegen weisen Ergebnisse auf, die erfindungsgemäß sind, und bei diesen Beispielen liegt das Gewichtsverhältnis von Polymer (A) zu Polymer (B) auch im erfindungsgemäßen Bereich von 55 bis 75 Gew.-% Polymer (A) und 25 bis 45 Gew.-% Polymer B.

**Beispiele 10 bis 12**

Zur Bestimmung der Homogenität der Mischung (Stippenfreiheit) wurden folgende drei weitere Formmassen bereitgestellt:

Beispiel 10 war die Formmasse aus Beispiel 1, also reines Polymer (A).

Beispiel 11 war ein in situ Reaktorblend, also ein modifiziertes Polymer (A), bei dem bei der Herstellung die Mengen an Ethylen in Reaktor 1 und Reaktor 2 vertauscht waren. In Reaktor 1 wurden 10 kg Ethylen/h und in Reaktor 2 nur 9 kg Ethylen/h zugegeben plus 260 ml/h 1-Buten als Comonomer. Das so modifizierte Polymer (A) hatte einen MFI$^{A'}_{5/190°C}$ von 0,33 dg/min, eine Dichte von 0,956 g/cm$^3$ und es enthielt eine Menge von 1,7 Gew.-% Comonomer, bezogen auf das Gesamtgewicht der höhermolekularen Komponente.

Beispiel 12 war eine Mischung aus 34 Gew.-% Polymer (B) und 66 Gew.-% Polymer (A).

An diesen Formmassen wurden anschließend die Scherviskositäten η bei den verschiedenen Kreisfrequenzen gemessen und in Relation gesetzt und es wurde die Homogenität (Stippenfreiheit) geprüft, nachdem Polymerpulver der Beispiele 10 und 11 in einem Extruder granuliert und anschließend zu Blasfolien mit einer Schichtdicke von 5 μm verarbeitet wurden und nachdem die Mischung nach Beispiel 12 aus den Pulvern der Polymere (A) und (B) in dem gleichen Extruder bei gleicher Temperatur und gleichem Durchsatz hergestellt und analog weiterverarbeitet wurde. Die Ergebnisse der Beispiel 10 bis 12 sind in der nachfolgenden Tabelle 4 angegeben:

Tabelle 4

| Beispiel | η($10^{-3}$rad/s) [Pa·s] | η(100rad/s) [Pa.s] | $\eta_{0,001r/s}/\eta_{100r/s}$ | Homogenität nach GKR RiLi max. Größe [*)] |
|---|---|---|---|---|
| 10 | 1,70·$10^5$ | 2570 | 66,1 | 0,013 |
| 11 | 2,55·$10^5$ | 2400 | 106,3 | 0,014 |
| 12 | 3,75·$10^5$ | 1980 | 146 | 0,0010 |

[*)] Die Homogenität wird nach der Richtlinie der Gütegemeinschaft Kunststoffrohre e.V. Nr. R 14.3.1 DA, Ziffer 3.1.1.3 ermittelt.

Weitere Eigenschaften der nach den Beispielen 10 bis 12 hergestellten Polymeren sind in der nachfolgenden Tabelle 5 angegeben.

Tabelle 5

| Beispiel | Dichte [g/cm$^3$] | MFR$_{190/21,6}$ [dg/min] | Viskositätszahl [ml/g] |
|---|---|---|---|
| 10 | 0,954 | 9,2 | 330 |
| 11 | 0, 956 | 9,52 | 370 |
| 12 | 0,954 | 8,8 | 340 |

Die Beispiele 10 bis 12 zeigen, dass nur die erfindungsgemäße Mischung bei gleicher Temperatur und gleichem Durchsatz für den Fachmann völlig überraschend zu sprunghaft verbesserter Homogenität und Stippenfreiheit führt.

Anschließend wurden nach den in der Beschreibung vor den Ausführungsbeispielen angegebenen Messmethoden noch die Spannungsrissbeständigkeit FNCT [h] bei einer Temperatur von 95 °C und die Bruchzähigkeit aFM [kJ/m$^2$) bei einer Temperatur von 0 °C bestimmt. Die Ergebnisse sind in der folgenden Tabelle 6 zusammengefasst:

Tabelle 6

| | aFM [kJ/m$^2$] | FNCT [h] |
|---|---|---|
| Beispiel 10 | 8,9 | nicht bestimmt |
| Beispiel 11 | 8,1 | 130,1 |
| Beispiel 12 | 10,6 | 175,0 |

Man erkennt auch daran deutlich, dass nur die erfindungsgemäße Mischung aus Ethylenpolymer A und Ethylenpolymer B in dem erfindungsgemäß gefundenen Mischungsverhältnis sprunghaft verbesserte Spannungsrissbeständigkeit FNCT und zusammen damit auch sprunghaft verbesserte Bruchzähigkeit aFM aufweist.

**Patentansprüche**

1.    Polymere Formmasse aus einem ersten Ethylenpolymer (A) und einem zweiten Ethylenpolymer (B), die sich besonders zur Herstellung dickwandiger großkalibriger Rohre eignet, **dadurch gekennzeichnet, dass** die Formmasse eine Menge im Bereich von 55 bis 75 Gew.-% an erstem Ethylenpolymer (A) und eine Menge im Bereich von 25 bis 45 Gew.-% an zweitem Ethylenpolymer (B) enthält, jeweils bezogen auf das Gesamtgewicht der Formmasse, wobei das erste Ethylenpolymer (A) ein Copolymer von Ethylen mit einem 1-Olefin mit einer Gesamtzahl von C-Atomen im Bereich von 4 bis 10 als Comonomer und mit einem Comonomeranteil von 0,2 bis 5 Gew.-%, bezogen auf das Gewicht des ersten Ethylenpolymers (A), mit einer in zwei getrennten Polymorisationsstufen gebildeten bimodalen Molmassenverteilung darstellt und wobei das zweite Ethylenpolymer (B) ein Copolymer aus Ethyleneinheiten und einem 1-Olefin mit einer Anzahl von C-Atomen im Bereich von 4 bis 10 darstellt, das eine bimodale Molmassenverteilung besitzt; die anders ist als die des ersten Ethylenpolymers (A).

2. Polymere Formmasse nach Anspruch 1, **dadurch gekennzeichnet, dass** sie durch Mischen der getrennt voneinander hergestellten Mischungskomponenten, erstes Ethylenpolymer (A) und zweites Ethylenpolymer (B), in einem Extruder als Extruderblend hergestellt wird.

3. Polymere Formmasse nach Anspruch 1 oder 2, **dadurch gekennzeichnet, dass** sie vorzugsweise ein erstes Ethylenpolymer (A) mit einer Dichte (gemessen bei einer Temperatur von 23 °C) im Bereich von 0,94 bis 0,96 g/cm$^3$ und einer breiten bimodalen Molmassenverteilung enthält, bei dem das Verhältnis des Gewichts des niedermolekularen Anteils zum Gewicht des höhermolekularen Anteils im Bereich von 0,5 bis 2,0 liegt, vorzugsweise von 0,8 bis 1,8.

4. Polymere Formmasse nach einem der Ansprüche 1 bis 3, **dadurch gekennzeichnet, dass** das erste Ethylenpolymer (A) eine Menge von 0,2 bis 4,5 Gew.-% an weiteren Comonomereinheiten enthält ausgewählt aus der Gruppe enthaltend 1-Buten, 1-Penten, 1-Hexen, 4-Methylpenten-1 oder Mischungen von diesen.

5. Polymere Formmasse nach einem der Ansprüche 1 bis 4, **dadurch gekennzeichnet, dass** sie ein zweites Ethylenpolymer (B) enthält, das als Reaktorblend in Gegenwart eines Ziegler Katalysators hergestellt ist und das eine Menge im Bereich von 15 bis 40 Gew.-% an ultrahochmolekularem Ethylenhomopolymer als Komponente (B$^1$) und eine Menge im Bereich von 60 bis 85 Gew.-% an niedermolekularem Copolymer mit 1-Buten als Comonomer in einer Menge von 1 bis 15 Gew.-% als Komponente (B$^2$) enthält, bezogen auf das Gesamtgewicht an zweitem Ethylenpolymer (B).

6. Polymere Formmasse nach Anspruch 5, **dadurch gekennzeichnet, dass** das ultrahochmolekulare Ethylenhomopolymer der Komponente (B$^1$) eine Viskositätszahl, ausgedrückt als VZ$^{B1}$, im Bereich von 1000 bis 2000 cm$^3$/g besitzt und dass das niedermolekulare Homopolymer der Komponente (B$^2$) eine Viskositätszahl, ausgedrückt als VZ$^{B2}$, im Bereich von 80 bis 150 cm$^3$/g aufweist.

7. Polymere Formmasse nach einem der Ansprüche 1 bis 6, **dadurch gekennzeichnet, dass** sie eine Bruchzähigkeit aFM von größer/gleich 10 kJ/m$^2$ besitzt.

8. Polymere Formmasse nach einem der Ansprüche 1 bis 7, **dadurch gekennzeichnet, dass** sie eine Spannungsrissbeständigkeit FNCT von $\geq$ 150 h besitzt.

9. Polymere Formmasse nach einem der Ansprüche 1 bis 8, **dadurch gekennzeichnet, dass** ihre Scherviskosität, gemessen bei 0,001 rad/s, $\geq$ 2,0·10$^5$ Pa·s ist, vorzugsweise $\geq$ 2,7·10$^5$ Pa·s.

10. Polymere Formmasse nach einem der Ansprüche 1 bis 9, **dadurch gekennzeichnet, dass** das Viskositätsverhältnis der Scherviskositäten der Formmasse $\eta_{(0,001)}/\eta_{(100)}$ größer/gleich 100 ist.

11. Hochfestes Rohr aus einer Formmasse nach einem der Ansprüche 1 bis 10, **dadurch gekennzeichnet, dass** das Ethylenpolymer A Comonomere mit 4 bis 6 Kohlenstoffatomen in einer Menge von 0 bis 0,1 Gew.-% im niedermolekularen Anteil und in einer Menge von 2,5 bis 4 Gew.-% im höhermolekularen Anteil enthält und einen Schmelzflussindex MFI$_{5/190°C}$ von $\leq$ 0,35 g/10 min besitzt.

12. Rohr nach Anspruch 10, **dadurch gekennzeichnet, dass** es einen Widerstand gegen schnelles Rißwachstum, gemessen nach ISO/DIS 13477 an einem Rohr der Druckklasse PN 10 mit einem Druchmesser von 110 mm (54-Test), von größer/gleich 20 bar besitzt.

13. Verwendung eines Rohres nach Anspruch 11 oder 12 zum Transport von Gasen, insbesondere zum Transport von Erdgas, oder Wasser.

**Claims**

1. A polymeric molding compound made from a first ethylene polymer (A) and from a second ethylene polymer (B) which is particularly suitable for producing thick-walled large-caliber pipes, wherein the molding compound comprises an amount in the range from 55 to 75% by weight of the first ethylene polymer (A) and an amount in the range from 25 to 45% by weight of the second ethylene polymer (B), based in each case on the total weight of the molding compound, where the first ethylene polymer (A) is a copolymer of ethylene with a 1-olefin having a total number of carbon atoms in the range from 4 to 10 as comonomer, and with a proportion of from 0.2 to 5% by weight of comonomer, based on the weight of the first ethylene polymer (A), with a bimodal molar mass distribution formed in two separate polymerization stages, and where the second ethylene polymer (B) is a copolymer made from ethylene units and from a 1-olefin having a number of carbon atoms in the range from 4 to 10, which has a bimodal molar mass distribution differing from that of the first ethylene polymer (A).

2. The polymeric molding compound as claimed in claim 1, which is prepared by mixing the mixing components, prepared separately from one another, the first ethylene polymer (A) and the second ethylene polymer (B), in an extruder in the form of an extruder blend.

3. The polymeric molding compound as claimed in claim 1 or 2, which preferably comprises a first ethylene polymer (A) with a density (measured at a temperature of 23°C) in the range from 0.94 to 0.96 $g/cm^3$ and comprises a broad bimodal molar mass distribution, where the ratio, within the ethylene polymer (A), between the weight of the low-molecular-weight fraction and the weight of the higher-molecular-weight fraction is in the range from 0.5 to 2.0, preferably from 0.8 to 1.8.

4. The polymeric molding compound as claimed in any of claims 1 to 3, wherein the first ethylene polymer (A) contains an amount from 0.2 to 4.5% by weight of other co-monomer units selected from the group consisting of 1-butene, 1-pentene, 1-hexene, 4-methyl-1-pentene, and mixtures of these.

5. The polymeric molding compound as claimed in any of claims 1 to 4, which comprises, based on the total weight of the second ethylene polymer (B), which has been prepared in the form of a reactor blend in the presence of a Ziegler catalyst, and which comprises an amount in the range from 15 to 40% by weight of ultrahigh-molecular-weight ethylene homopolymer as component ($B^1$) and comprises an amount in the range from 60 to 85% by weight of low-molecular-weight copolymer with 1-butene as comonomer in an amount of from 1 to 15% by weight, as component ($B^2$).

6. The polymeric molding compound as claimed in claim 5, wherein the ultrahigh-molecular-weight ethylene homopolymer of component ($B^1$) has a viscosity number, $VN^{B1}$, in the range from 1 000 to 2 000 $cm^3/g$, and wherein the low-molecular-weight homopolymer of component ($B^2$) has a viscosity number, $VN^{B2}$, in the range from 80 to 150 $cm^3/g$.

7. The polymeric molding compound as claimed in any of claims 1 to 6, which has fracture toughness aFM greater than or equal to 10 $kJ/m^2$.

8. The polymeric molding compound as claimed in any of claims 1 to 7, which has an FNCT stress-cracking resistance of ≥ 150 h.

9. The polymeric molding compound as claimed in any of claims 1 to 8, whose shear viscosity, measured at 0.001 rad/s, is ≥ $2.0 \cdot 10^5$ Pa·s, preferably ≥ $2.7 \cdot 10^5$ Pa·s.

10. The polymeric molding compound as claimed in any of claims 1 to 9, whose viscosity ratio of the shear viscosities of the molding compound $\eta_{(0.001)}/\eta_{(100)}$ is greater than or equal to 100.

11. A high-strength pipe made from a molding compound as claimed in any of claims 1 to 10, wherein the ethylene polymer A contains comonomers having from 4 to 6 carbon atoms, the amount being from 0 to 0.1% by weight in the low-molecular-weight fraction and from 2.5 to 4% by weight in the higher-molecular-weight fraction, and has a melt flow index $MFI_5/_{190°C}$ of ≤ 0.35 g/10 min.

**12.** The pipe as claimed in claim 10, whose resistance to rapid crack propagation, measured to ISO/DIS 13477 on a pipe in pressure class PN 10 with diameter 110 mm (S4 test) is greater than or equal to 20 bar.

**13.** The use of a pipe as claimed in claim 11 or 12 for the transport of gases, and in particular for the transport of natural gas, or water.

**Revendications**

**1.** Matière moulable polymère, composée d'un premier polymère d'éthylène (A) et d'un deuxième polymère d'éthylène (B), qui est appropriée en particulier pour la fabrication de tubes de gros calibre à parois épaisses, **caractérisée en ce que** la matière moulable contient une quantité du premier polymère d'éthylène (A) de 55% à 75% en poids et une quantité du deuxième polymère d'éthylène (B) de 25% à 45% en poids, à chaque fois par rapport au poids total de la matière moulable, le premier polymère d'éthylène (A) étant un copolymère d'éthylène avec une 1-oléfine ayant un nombre total d'atomes de carbone de 4 à 10 en tant que comonomère et avec une proportion de comonomères de 0,2% à 5% en poids par rapport au poids du premier polymère d'éthylène (A), présentant une distribution bimodale des masses moléculaires formée dans deux étapes de polymérisation séparées, et le deuxième polymère d'éthylène (B) étant un copolymère formé de motifs éthylène et d'une 1-oléfine ayant un nombre d'atomes de carbone de 4 à 10, qui possède une distribution bimodale des masses moléculaires qui est différente de celle du premier polymère d'éthylène (A).

**2.** Matière moulable polymère selon la revendication 1, **caractérisée en ce qu'**elle est produite en mélangeant dans une extrudeuse les composants de mélange préparés séparément, le premier polymère d'éthylène (A) et le deuxième polymère d'éthylène (B), pour former un mélange extrudé.

**3.** Matière moulable polymère selon la revendication 1 ou 2, **caractérisée en ce qu'**elle contient de préférence un premier polymère d'éthylène (A) présentant une masse volumique (mesurée à une température de 23°C) de 0,94 à 0,96 $g/cm^3$ et une large distribution bimodale des masses moléculaires, dans lequel le rapport du poids de la fraction à faible masse moléculaire au poids de la fraction à haute masse moléculaire va de 0,5 à 2,0, de préférence de 0,8 à 1,8.

**4.** Matière moulable polymère selon l'une quelconque des revendications 1 à 3, **caractérisée en ce que** le premier polymère d'éthylène (A) contient une quantité de 0,2% à 4,5% en poids de motifs comonomères supplémentaires choisis dans le groupe formé par le 1-butène, le 1-pentène, le 1-hexène, le 4-méthylpentène-1 ou des mélanges de ceux-ci.

**5.** Matière moulable polymère selon l'une quelconque des revendications 1 à 4, **caractérisée en ce qu'**elle contient un deuxième polymère d'éthylène (B) qui est préparé en tant que mélange réactionnel en présence d'un catalyseur de Ziegler et qui contient une quantité de 15% à 40% en poids d'homopolymère d'éthylène à très haute masse moléculaire en tant que composant $(B^1)$ et une quantité de 60% à 85% en poids de copolymère à faible masse moléculaire, avec du 1-butène en tant que comonomère dans une quantité de 1% à 15% en poids, en tant que composant $(B^2)$, par rapport au poids total du deuxième polymère d'éthylène (B).

**6.** Matière moulable polymère selon la revendication 5, **caractérisée en ce que** l'homopolymère d'éthylène à très haute masse moléculaire du composant $(B^1)$ possède un indice de viscosité, exprimé en tant que $VZ^{B1}$, de 1000 à 2000 $cm^3/g$, et **en ce que** l'homopolymère à faible masse moléculaire du composant $(B^2)$ présente un indice de viscosité, exprimé en tant que $VZ^{B2}$, de 80 à 150 $cm^3/g$.

**7.** Matière moulable polymère selon l'une quelconque des revendications 1 à 6, **caractérisée en ce qu'**elle possède une résistance à la rupture aFM supérieure ou égale à 10 $kJ/m^2$.

**8.** Matière moulable polymère selon l'une quelconque des revendications 1 à 7, **caractérisée en ce qu'**elle possède une résistance à la fissure due à une contrainte FNCT supérieure ou égale à 150 h.

**9.** Matière moulable polymère selon l'une quelconque des revendications 1 à 8, **caractérisée en ce que** sa viscosité dynamique, mesurée à 0,001 rad/s, est supérieure ou égale à $2,0.10^5$ Pa.s, de préférence supérieure ou égale à $2,7.10^5$ Pa.s.

**10.** Matière moulable polymère selon l'une quelconque des revendications 1 à 9, **caractérisée en ce que** le rapport de viscosité des viscosités dynamiques de la matière moulable $\eta_{(0,\ 001)} / \eta_{(100)}$ est supérieur ou égale à 100.

**11.** Tube haute résistance fabriqué à partir d'une matière moulable selon l'une quelconque des revendications 1 à 10, **caractérisé en ce que** le polymère d'éthylène A contient des comonomères ayant 4 à 6 atomes de carbone dans une quantité de 0% à 0,1% en poids dans la fraction à faible masse moléculaire et dans une quantité de 2,5% à 4% en poids dans la fraction à haute masse moléculaire, et **en ce qu'**il possède un indice de fluidité $MFI_{5/190°C}$ inférieur ou égal à 0,35 g/10 min.

**12.** Tube selon la revendication 10, **caractérisé en ce qu'**il présente une résistance à la propagation rapide de la fissure, mesurée selon ISO/DIS 13477 sur un tube de classe de pression PN 10 d'un diamètre de 110 mm (essai S4), supérieure ou égale à 20 bars.

**13.** Utilisation d'un tube selon la revendication 11 ou 12 pour le transport de gaz, en particulier pour le transport de gaz naturel, ou d'eau.